Europäisches Patentamt

European Patent Office

Office européen des brevets

(19)

(11) Veröffentlichungsnummer: **0 035 145**
**B1**

(12) **EUROPÄISCHE PATENTSCHRIFT**

(45) Veröffentlichungstag der Patentschrift:
04.04.84

(21) Anmeldenummer: 81100989.3

(22) Anmeldetag: 12.02.81

(51) Int. Cl.³: **C 03 B 40/02**, C 03 B 7/10, C 03 B 7/16, C 03 B 9/34, C 03 B 11/06

(54) Vorrichtung zum Aufbringen einer Schmier- oder Trennflüssigkeit auf ein Glasformmaschinenteil.

(30) Priorität: 28.02.80 DE 3007512

(43) Veröffentlichungstag der Anmeldung:
09.09.81 Patentblatt 81/36

(45) Bekanntmachung des Hinweises auf die Patenterteilung:
04.04.84 Patentblatt 84/14

(84) Benannte Vertragsstaaten:
AT BE CH FR GB IT LI LU NL SE

(56) Entgegenhaltungen:
DE - A - 1 934 072
FR - A - 2 145 651
US - A - 1 638 593
US - A - 2 230 609
US - A - 2 754 627
US - A - 2 844 918
US - A - 3 141 752
US - A - 3 580 711
US - A - 3 814 594

(73) Patentinhaber: HERMANN HEYE, Allee,
D-3063 Obernkirchen (DE)

(72) Erfinder: Geisel, Gerhard, Georgstrasse 13,
D-3062 Bückeburg (DE)

(74) Vertreter: Kosel, Peter, Dipl.-Ing. et al, Patentanwälte
Dipl.-Ing. Horst Röse Dipl.-Ing. Peter Kosel
Postfach 129 Odastrasse 4a, D-3353 Bad Gandersheim
(DE)

BUNDESDRUCKEREI BERLIN

## Vorrichtung zum Aufbringen einer Schmier- oder Trennflüssigkeit auf ein Glasformmaschinenteil

Die Erfindung betrifft eine Vorrichtung gemäß dem Oberbegriff des Patentanspruchs 1.

Bei der Fertigung von Glasgegenständen müssen insbesondere die mit dem Glas in Berührung tretenden Flächen von Teilen der Glasformmaschine in Abständen mit der Schmier- oder Trennflüssigkeit beschichtet werden. Dadurch wird das Reibungs- und Adhäsionsverhalten einerseits zwischen Maschinenteil und Glas und andererseits zwischen zusammenwirkenden Maschinenteilen verbessert.

Es ist bekannt, die Schmier- oder Trennflüssigkeit von Hand mittels eines Tupfers in Abständen, z. B. nach jedem 200sten Arbeitszyklus, auf das betreffende Maschinenteil aufzubringen. Dieses Aufbringen ist weder in der jeweils aufzubringenden Flüssigkeitsmenge reproduzierbar noch über die Oberfläche des Maschinenteils ausreichend gleichmäßig. Ferner ergibt sich ein verhältnismäßig hoher Ausschuß, z. B. 1 bis 2%, weil nach jedem Aufbringen die ersten Glasgegenstände außen durch die Flüssigkeit verunreinigt sind und eingebrannte Rückstände aufweisen, also nicht verkäuflich sind. Nachteilig wirkt sich ferner aus, daß das Aufbringen nicht in jedem Arbeitszyklus erfolgen kann, man also auf eine gewisse Speicherung von Schmier- oder Trennflüssigkeit angewiesen ist.

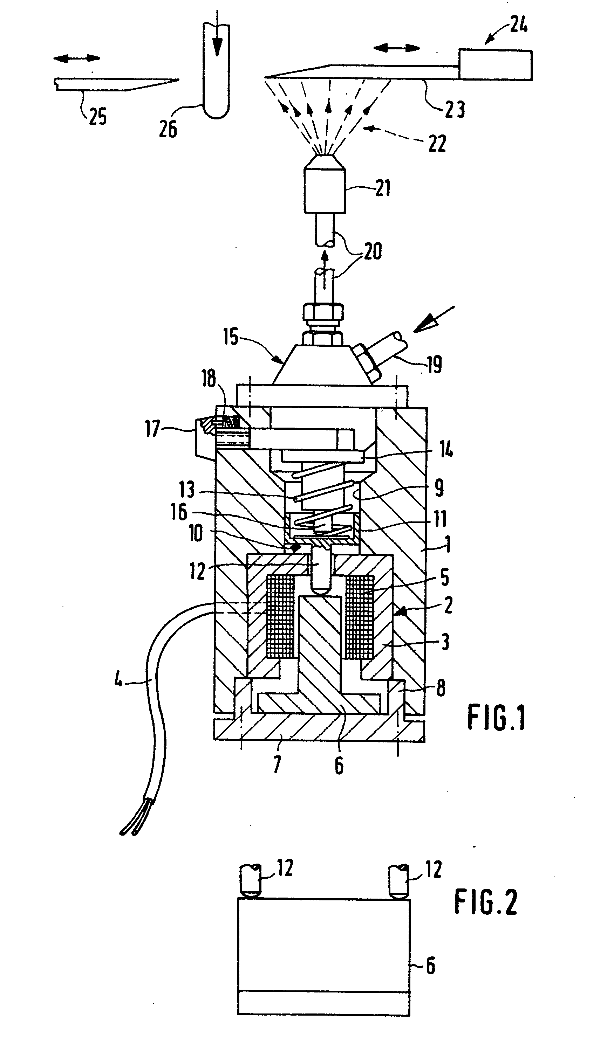

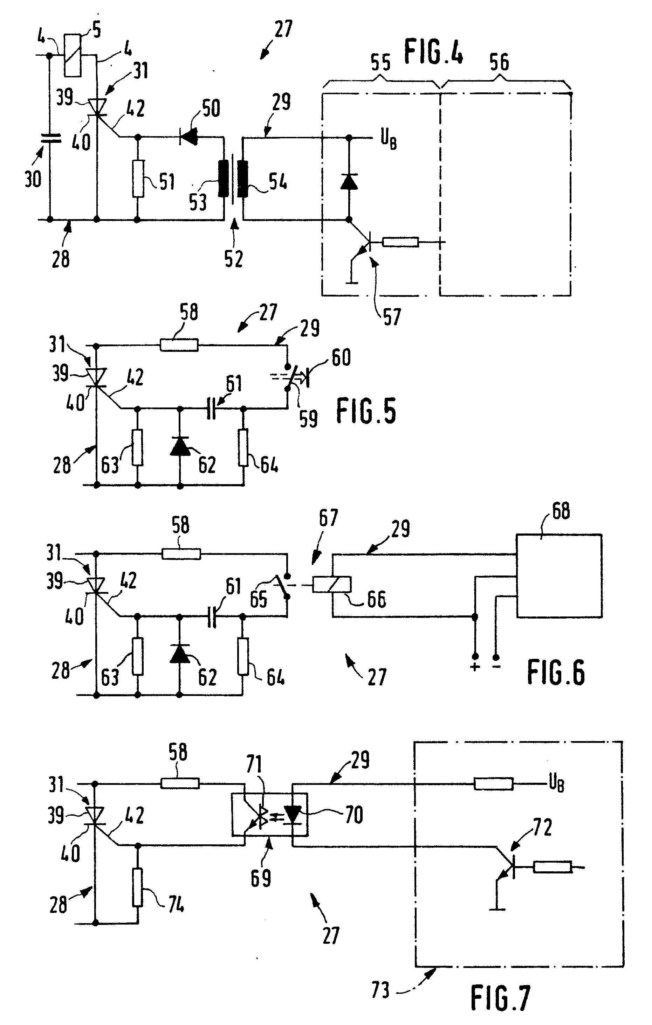

Bei einer bekannten Vorrichtung der eingangs genannten Art (DE-Offenlegungsschrift 1 934 072) werden sämtliche Sprühdüsen (35) einer Vielsektionen-I.S.-Glasformmaschine durch eine einzige Pumpe (26) über eine gemeinsame Verteilerleitung (27) mit Schmierflüssigkeit versorgt, die aus einem Vorratsbehälter (25) angesaugt wird. Für jede Sektion (10) ist an die Verteilerleitung (27) ein pneumatisch (Fig. 2) oder elektromagnetisch (Fig. 6) steuerbares Ventil (30; 30') angeschlossen. Jedes dieser Ventile (30; 30') ist über zumindest teilweise flexible Leitungen (29, 34 (Fig. 4), 33) mit den Sprühdüsen (35) verbunden. Ungünstig ist hierbei, daß die Leitungslänge zwischen der Pumpe (26) und den einzelnen Sprühdüsen (35) einerseits verhältnismäßig groß und andererseits ungleich ist. Damit ist eine gleichmäßige Versorgung der Sprühdüsen (35) mit Schmierflüssigkeit ausgeschlossen. Auch ist eine Versorgung der einzelnen Sprühdüsen (35) mit Schmierflüssigkeit unterschiedlicher Drücke nicht möglich. Die flexiblen Leitungsteile schließen den Einsatz von unter Hochdruck von mehr als 100 bar stehender Schmierflüssigkeit aus und können sich in ungünstiger Weise unter dem Druck der Schmierflüssigkeit verformen. Das führt zu unerwünschter und unkontrollierbarer Speicherung von Schmierflüssigkeit und läßt weder exakte und reproduzierbare Aufbringungszeitpunkte noch eine genaue Dosierung der je Sprühvorgang zu versprühenden Menge der Schmierflüssigkeit zu.

Der Erfindung liegt die Aufgabe zugrunde, das Aufbringen der Schmier- oder Trennflüssigkeit zu optimieren und insbesondere die Reproduzierbarkeit des Aufbringungszeitpunkts zu verbessern und eine Feindosierung der jeweils aufzubringenden Menge der Schmier- oder Trennflüssigkeit zu ermöglichen.

Diese Aufgabe ist durch die im Kennzeichnungsteil des Patentanspruchs 1 angegebenen Merkmale gelöst. Durch dieses Hochdruckversprühen ohne ein Treib- oder Trägergas wird die Schmier- oder Trennflüssigkeit in dem gewünschten Ausmaß fein zerstäubt und ist in der Lage, die Oberfläche des betreffenden Glasformmaschinenteils in gewünschter Verteilung zu benetzen. Bei Bedarf ist eine sehr gleichmäßige Verteilung der Schmier- oder Trennflüssigkeit erreichbar. Durch geeignete Ansteuerung des Antriebs der wenigstens einen Preßpumpe kann der Sprühzeitpunkt in gewünschten engen Grenzen reproduzierbar gestaltet werden. Bei Verwendung mehrerer Sprühdüsen können diese durch entsprechenden Antrieb der Preßpumpen unabhängig voneinander einzeln oder in Gruppen mit der Schmier- oder Trennflüssigkeit beaufschlagt werden. Da die Schmier- oder Trennflüssigkeit ohne Verwendung eines Treib- oder Trägergases aufgebracht wird, ist eine besonders schnelle und vollständige Benetzung der gewünschten Flächen mit der Schmier- oder Trennflüssigkeit gewährleistet, da kein Gasanteil des Sprühstrahles die Flugbahn der einzelnen Flüssigkeitströpfchen ungünstig beeinflussen kann.

Nach einer Ausführungsform der Erfindung weist der Antrieb einen Elektromagneten auf, durch dessen Anker die wenigstens eine Preßpumpe betätigbar ist, wobei eine Wicklung des Elektromagneten im Entladestromkreis eines Kondensators eines Energieversorungsteils einer elektrischen Steuerschaltung angeordnet ist, und wobei der Energieversorungsteil in Reihenschaltung mit dem Kondensator ein steuerbares Schaltelement enthält, das durch einen Steuerteil der elektrischen Steuerschaltung betätigbar ist. Diese Vorrichtung hat einen vergleichsweise geringen Raumbedarf, kann dezentral in unmittelbarer Nähe des zu besprühenden Teils der Glasformmaschine angeordnet werden, benötigt dadurch in günstiger Weise nur kurze Hochdruckleitungen, gestattet eine Feindosierung der zu versprühenden Schmier- oder Trennflüssigkeit und gestattet eine in allen Fällen ausreichende Reproduzierbarkeit des Sprühzeitpunkts. Der Elektromagnet kann im Vergleich zu den dadurch erzeugten Kräften vergleichsweise klein gebaut sein, weil seine Wicklung bei Erregung nur kurzzeitig von einem sehr hohen Strom durchflossen wird.

Nach einer weiteren Ausführungsform der Erfindung weist ein Ladestromkreis des Kondensators einen Gleichrichter und eine Spannungsverdopplungsschaltung auf, die mit der Sekundärwicklung eines Netztransformators verbunden sind. Der Kondensator läßt sich auf diese Weise mit minimaler Verlustleistung laden. Als Kondensator kann z. B. ein schaltfester Elektrolytkondensator eingesetzt werden.

Nach einer anderen Ausführungsform der Erfindung sind an die Sekundärwicklung eines Netztransformators mehrere Energieversorgungsteile parallel zueinander angeschlossen, wobei jeder Energieversorgungsteil einen Kondensator gemäß zuvor geschilderten Merkmalen auflädt. So läßt sich kostengünstig eine Verzweigung erzielen.

Dem gleichen Zweck dient es, wenn erfindungsgemäß im Entladestromkreis des Kondensators die Wicklungen mehrerer jeweils wenigstens eine Preßpumpe antreibenden Elektromagneten angeordnet sind.

Nach einer Ausführungsform der Erfindung ist das steuerbare Schaltelement ein Thyristor, dessen Steuergate mit dem Steuerteil der elektrischen Steuerschaltung verbunden ist. Damit ergibt sich eine einfache Schaltung ausreichender Leistung.

Zur Erhöhung der Betriebssicherheit sind nach einer weiteren Ausführungsform der Erfindung der Energieversorgungsteil und der Steuerteil der elektrischen Steuerschaltung, z. B. durch einen Optokoppler oder einen Relaiskontakt oder einen Zündtransformator, galvanisch voneinander getrennt. Es kann ein Transistor-Optokoppler oder ein Thyristor-Optokoppler eingesetzt werden, wenn man diese Art der galvanischen Trennung wählt.

Nach einer anderen Ausführungsform der Erfindung ist der Steuerteil der elektrischen Steuerschaltung mit einem Steuerelement, z. B. einem Relaiskontakt, der Schnittstelle eines Rechnersystems einem Näherungsinitiator oder einer übergeordneten elektronischen Steuerung der Glasformmaschine, verbunden. Durch diese Flexibilität ist die Vorrichtung problemlos auf unterschiedliche Weise zu steuern.

Nach einer anderen Ausführungsform der Erfindung kann der Steuerteil der elektrischen Steuerschaltung mit einem als Tastschalter ausgebildeten Steuerelement verbunden sein.

Bei modernen vollautomatischen Glasformmaschinen werden z. B. in jedem Sprühvorgang zwischen 5 und 40 mm³ Schmier- oder Trennflüssigkeit je nach der Größe oder Belastung der zu besprühenden Oberfläche versprüht. Dafür stehen oft nur wenige ms zur Verfügung. Außerdem sind in diesen Glasformmaschinen die Raumverhältnisse wegen der dichten Packung von Konstruktionselementen beengt. Die zuvor beschriebenen Ausführungsformen der Erfindung gestatten unter diesen schwierigen Bedingungen dennoch eine in allen Fällen zufriedenstellende Aufbringung der Schmier- oder Trennflüssigkeit.

Nach einer anderen Ausführungsform der Erfindung weist der Antrieb einen Pneumatikmotor auf. Auch damit können die Preßpumpen genau gesteuert werden.

Nach einer weiteren Ausführungsform der Erfindung ist der Pneumatikmotor als Kolben-Zylinder-Einheit ausgebildet, deren Kolbenstange unmittelbar wenigstens eine Preßpumpe antreibt.

Nach einer Ausführungsform der Erfindung weist der Antrieb für jede Preßpumpe einen Nocken einer Nockenwelle auf. Die Preßpumpen können z. B. über Flach- oder Rollenstößel direkt durch die Nocken angetrieben werden. Gegenüber dem Antrieb mittels Pneumatikmotor ist bei diesem Nockenwellenantrieb die Reproduzierbarkeit des Sprühzeitpunkts verbessert.

Dies trifft insbesondere dann zu, wenn gemäß einer Ausführungsform der Erfindung die Nokkenwelle mit einem in der Drehzahl regelbaren elektrischen Antriebsmotor gekuppelt ist.

Zur Erzielung verhältnismäßig kleiner Antriebseinheiten kann gemäß einer weiteren Ausführungsform der Erfindung die Nockenwelle mit wenigstens einer weiteren Nockenwelle zum Antrieb wenigstens einer weiteren Preßpumpe gekuppelt sein. So lassen sich im Baukastensystem auch verhältnismäßig umfangreiche Sprühvorrichtungen realisieren. Es werden z. B. an einer Glasformmaschine 20 bis 100 derartige Preßpumpen für das Versprühen der Schmier- oder Trennflüssigkeit benötigt.

Die Sprühvorgänge lassen sich differenzieren, wenn gemäß einer weiteren Ausführungsform der Erfindung zwischen wenigstens zwei aufeinanderfolgende Nockenwellen ein Getriebe geschaltet ist.

Nach einer anderen Ausführungsform der Erfindung ist ein Einlaß wenigstens einer Preßpumpe an eine Niederdruckleitung für die Schmier- oder Trennflüssigkeit angeschlossen, in deren Vorlaufzweig eine Pumpe und in deren Rücklaufzweig zu einem Tank ein Druckbegrenzungsventil eingeschaltet sind. Auf diese Weise ist eine ständige und gleichmäßige Versorgung der Preßpumpen mit der Schmier- oder Trennflüssigkeit gewährleistet. Die Schmier- oder Trennflüssigkeit kann in der Niederdruckleitung ständig umlaufen. Dies ist z. B. dann von Vorteil, wenn die Schmier- oder Trennflüssigkeit aus einem Flüssigkeitsgemisch besteht, das zur Entmischung tendiert. Außerdem läßt sich so die Schmier- oder Trennflüssigkeit leichter auf einem gewünschten Temperaturniveau halten.

Die erwähnten Preßpumpen lassen sich entweder durch Pressen gleich vom unteren Totpunkt des Preßpumpenkolbens an (UT-Pressen) oder durch Pressen von einem Anfangspunkt zwischen dem unteren und dem oberen Totpunkt an bis zum oberen Totpunkt des Preßpumpenkolbens (OT-Pressen) betreiben. Für die Zwecke der vorliegenden Erfindung und insbesondere für den elektromagnetischen Antrieb der Preßpumpe, eignet sich das OT-Pressen besonders gut, weil zu der aufgewandten Antriebsenergie noch die in den bewegten Teilen der Vorrichtung angesammelte kinetische Energie hinzukommt. Gerade für das Versprühen verhältnismäßig kleiner Mengen Schmier- oder Trennflüssigkeit während einer verhältnismäßig kurzen Sprühdauer führt die zusätzliche kinetische Energie zu einem erwünschten schnelleren Druckanstieg in der Flüssigkeit.

Die Erfindung wird nachfolgend anhand der in den Zeichnungen dargestellten Ausführungsbeispiele näher erläutert. Es zeigt

Fig. 1 einen Längsschnitt durch eine Aufbringvorrichtung mit Elektromagnetantrieb,

Fig. 2 eine Seitenansicht eines Details einer anderen Aufbringvorrichtung,

Fig. 3 eine elektrische Steuerschaltung für die Aufbringvorrichtung gemäß Fig. 1,

Fig. 4 bis 7 jeweils eine andere Ausführungsform eines Steuerteils der Steuerschaltung gemäß Fig. 3,

Fig. 8 ein Schaltschema für eine Aufbringvorrichtung mit zwei Sprühdüsen,

Fig. 8A bis 8C Aufbringvorrichtungen zur Steuerung durch ein Schaltschema entsprechend Fig. 8,

Fig. 9 eine weitere Ausführungsform der Aufbringvorrichtung, teilweise im Längsschnitt, mit einem pneumatischen Antrieb,

Fig. 10 die Stirnansicht gemäß Linie X-X in Fig. 9,

Fig. 11 einen teilweisen Längsschnitt durch einen anderen Antrieb einer Aufbringvorrichtung mit Nockenwellen in schematischer Darstellung,

Fig. 12 eine Seitenansicht einer abgewandelten Nockenwelle für einen Antrieb gemäß Fig. 11 und

Fig. 13 schematisch eine Sprühdüsenanordnung mit Hochdruckleitungen.

Gemäß Fig. 1 ist in ein Gehäuse 1 ein Elektromagnet 2 eingesetzt, der ein Joch 3, eine über eine elektrische Leitung 4 versorgte Wicklung 5 und einen Anker 6 aufweist. In seiner in Fig. 1 gezeichneten Ruhelage liegt der Anker 6 an einem mit dem Gehäuse 1 verschraubten Boden 7 an, der mittels eines Innenringes 8 außerdem das Joch 3 fixiert.

In einer Bohrung 9 des Gehäuses 1 ist ein Zwischenstößel 10 mit einem topfartigen Oberteil 11 axial verschiebbar gelagert. Ein Stift 12 des Zwischenstößels 10 wird durch eine Rückstellfeder 13 in Berührung mit dem Anker 6 gedrückt. Die Rückstellfeder 13 stützt sich einerseits an dem Oberteil 11 des Zwischenstößels 10 und andererseits an einem Gehäuse 14 einer von oben in das Gehäuse 1 eingesetzten und damit verschraubten Preßpumpe 15 ab. Ein Kolben 16 der Preßpumpe 15 steht mit einem Boden des topfartigen Oberteils 11 in Berührung. Mit einer durch das Gehäuse 1 hindurchgeführten Verstellvorrichtung 17 läßt sich die mit jedem Hub der Preßpumpe 15 zu fördernde Menge einer Schmier- oder Trennflüssigkeit einstellen und mittels einer Rastvorrichtung 18 fixieren. Die Schmier- oder Trennflüssigkeit wird der Preßpumpe 15 durch eine Niederdruckleitung 19 zugeführt und verläßt die Preßpumpe 15 durch eine Hochdruckleitung 20 zu einer Sprühdüse 21, von der sie ohne ein Treib- oder Trägergas in einem Sprühkegel 22 auf ein Scherblatt 23 einer Glaspostenschere 24 gesprüht wird. Das Scherblatt 23 und ein damit zusammenwirkendes Scherblatt 25 der Glaspostenschere 24 sind in Richtung der eingezeichneten Doppelpfeile relativ zueinander bewegbar und trennen von einem Glasstrang 26 aufeinanderfolgende Glasposten ab, die in einer nicht gezeichneten Glasformmaschine weiterverarbeitet werden.

Eine ausreichende Schmierung der Scherblätter 23, 25 ist gewährleistet, wenn, wie in Fig. 1 gezeichnet, lediglich in der voll geöffneten Endstellung der Glaspostenschere 24 durch kurzzeitige Erregung der Wicklung 5 des Elektromagneten 2 eine verhältnismäßig geringe Schmiermittelmenge ebenso kurzzeitig mit Hochdruck auf zumindest das Scherblatt 23 aufgesprüht wird. Bei Bedarf kann das Scherblatt 25 zusätzlich durch eine der Sprühdüse 21 entsprechende, in Fig. 1 nicht gezeichnete Sprühdüse mit Schmierflüssigkeit besprüht werden.

In Fig. 2 treibt der Anker 6 nicht nur einen Stift 12 und damit eine Preßpumpe 15 wie in Fig. 1 an, sondern zwei Stifte 12 und damit zwei nicht gezeichnete Preßpumpen.

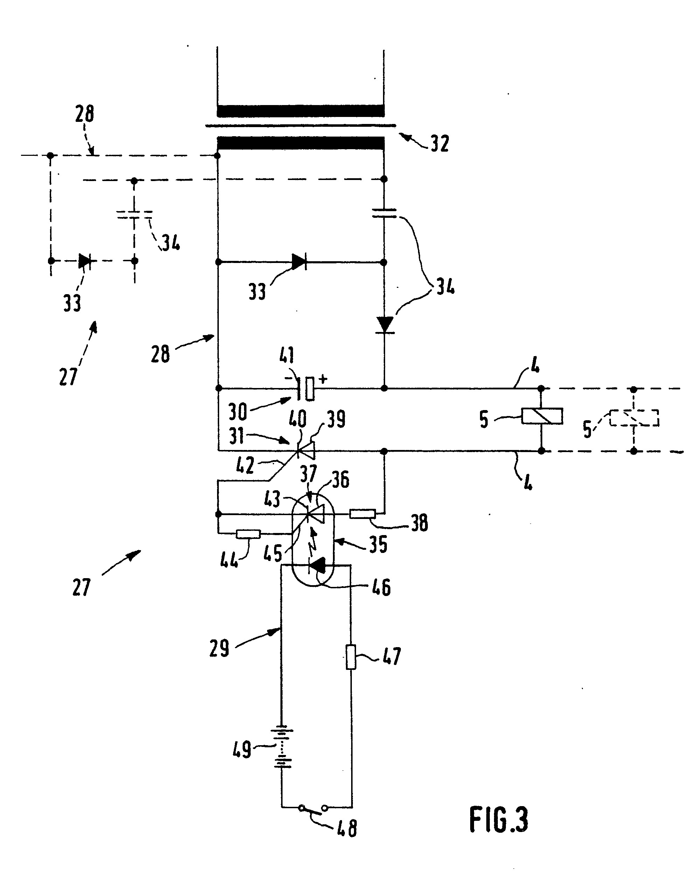

Fig. 3 zeigt für die Wicklung 5 eine elektrische Steuerschaltung 27 mit einem Energieversorgungsteil 28 und einem Steuerteil 29.

Die Wicklung 5 liegt im Entladestromkreis eines Kondensators 30, der als schaltfester Elektrolytkondensator ausgebildet ist. In dem Energieversorgungsteil 28 ist in Reihe mit dem Kondensator 30 ein als Thyristor ausgebildetes steuerbares Schaltelement 31 eingeschaltet, das durch den Steuerteil 29 betätigbar ist.

Der Kondensator 30 wird durch einen Netztransformator 32 mit nachgeschaltetem Gleichrichter 33 und Spannungsverdopplungsschaltung 34 aufgeladen. Die Spannungsverdopplungsschaltung 34 hat hierbei nicht vorrangig die Aufgabe, die erzeugte Gleichspannung zu verdoppeln, sie soll vielmehr den Ladestrom des Kondensators 30 begrenzen, ohne wesentliche Verlustleistung in Form von Wärme zu erzeugen.

Der Energieversorgungsteil 28 und der Steuerteil 29 der elektrischen Steuerschaltung 27 sind in Fig. 3 durch einen Optokoppler 35 galvanisch voneinander getrennt. Eine Anode 36 eines Thyristors 37 des Optokopplers 35 ist über einen Widerstand 38 mit einer Anode 39 des Schaltelements 31 verbunden. Der Widerstand 38 begrenzt den Zündstrom des Schaltelements 31. Eine Kathode 40 des Schaltelements 31 ist mit einer Elektrode 41 des Kondensators 30 verbunden. Ein Steuergate 42 des Schaltelements 31 ist einerseits mit einer Kathode 43 des Thyristors 37 und andererseits über einen Widerstand 44 mit einem Steuergate 45 des Thyristors 37 verbunden. Der Widerstand 44 bestimmt die Empfindlichkeit des Optokopplers 35. Ist er niederohmig, ist die Empfindlichkeit gering, und umgekehrt.

Eine Leuchtdiode 46 des Optokopplers 35 ist über einen Widerstand 47 und einen Schalter 48 mit einer Hilfsspannungsquelle 49 verbunden. Der Widerstand 47 dient zur Strombegrenzung.

Links oben ist in Fig. 3 gestrichelt ein weiterer Energieversorgungsteil 28 parallel zu dem voll ausgezogenen Energieversorgungsteil 28 dem Netztransformator 32 nachgeschaltet. Es können, wie dies in Fig. 3 gestrichelt angedeutet ist, noch weitere derartige Energieversorgungsteile 28 parallelgeschaltet werden.

In Fig. 3 ist außerdem in der Mitte rechts gestrichelt angedeutet, daß der Wicklung 5 noch wenigstens eine weitere Wicklung 5 parallel geschaltet werden kann.

In Fig. 4 ist das als Thyristor ausgebildete steuerbare Schaltelement 31 über eine Diode 50 und einen Widerstand 51 mit einem Zündtransformator 52 gekoppelt. Das Schaltelement 31 kann dadurch gezündet werden, daß man sein Steuergate 42 um so viel positiver macht als seine Kathode 40, daß in das Steuergate 42 ein Strom hineinfließt. Das Steuergate 42 ist einerseits über den Widerstand 51 mit der Kathode 40 des Schaltelements 31 und andererseits über die Diode 50 mit einer Sekundärwicklung 53 des Zündtransformators 52 verbunden. Die Sekundärwicklung ist ferner mit der Kathode 40 verbunden.

Wenn im Ruhezustand keine Steuersignale über den Zündtransformator 52 gekoppelt werden, ist das Steuergate 42 über den Widerstand 51 mit der Kathode 40 verbunden, so daß ein definierter Abschlußwiderstand besteht. Das Schaltelement 31 ist dann gesperrt.

Wenn andererseits auf einer Primärwicklung 54 des Zündtransformators 52 ein Steuerimpuls erscheint, koppelt dieser sich transformatorisch auf die Sekundärwicklung 53 und gelangt über die Diode 50 zum Steuergate 42. Über den Widerstand 51 fließt nur geringer Strom, während der größte Teil des Stromes durch das Steuergate 42 in das Schaltelement 31 fließt und das Schaltelement 31 zündet. Die Diode 50 schützt das Schaltelement 31 vor unzulässig hoher negativer Spannung an dem Steuergate 42. Sie sperrt negative Impulse.

Gemäß Fig. 4 ist die Primärwicklung 54 mit einem als Anpaßgerät dienenden Rechnerinterface oder einer Rechnerschnittstelle 55 eines Rechners 56 verbunden. Die Rechnerschnittstelle 55 weist einen Ausgangstransistor 57 auf, dessen Kollektorstromkreis über die Primärwicklung 54 geht. Die Betriebsspannung ist mit $U_B$ bezeichnet. Der Rechner 56 veranlaßt durch entsprechende Adreßvorwahl über einen Logikkreis, den Ausgangstransistor 57 leitend zu machen. Der Ausgangstransistor 57 ist für Betriebsspannungen und Ströme ausgelegt, die an der Peripherie der Rechnerschnittstelle 55 benötigt werden.

In Fig. 4 ist der Kondensator 30 ein Metall-Papier-Kondensator.

In Fig. 5 ist die Anode 39 über einen Arbeitswiderstand 58 mit einem Schalter 59 verbunden, so daß an dem Schalter 59 eine positive Spannung anliegt. Wird der Schalter 59 durch Betätigung seines Drucktasters 60 geschlossen, gelangt die positive Spannung über den Schalter 59 zu einem Kondensator 61. Dabei fließt ein Ladestrom in dem Kondensator 61, der auf der anderen Plattenseite des Kondensators eine positive Spannungsspitze zur Folge hat, die das Schaltelement 31 über sein Steuergate 42 zündet. Wird der Schalter 59 geöffnet, entsteht eine negative Spannungsspitze, die durch eine Diode 62 abgeschnitten wird, um das Schaltelement 31 vor Zerstörung zu bewahren. Der Kondensator 61 wirkt in der Schaltung gemäß Fig. 5 als Koppelelement und arbeitet in Verbindung mit einem Widerstand 63 als Differenzierglied. Es wird die Flanke eines beim Schließen des Schalters 59 erzeugten Rechteckimpulses differenziert. Beim Öffnen des Schalters 59 ergibt sich ein negativer Spannungsimpuls, der von der Diode 62 kurzgeschlossen und damit für das Schaltelement 31 unwirksam wird.

In Fig. 5 dient ein Widerstand 64 als Koppelement, über das der Kondensator 61 wieder entladen wird, sobald der Schalter 59 geöffnet wird.

Die Schaltung gemäß Fig. 6 entspricht der Schaltung gemäß Fig. 5, jedoch wurde der Schalter 59 durch einen Relaiskontakt 65 ersetzt, der durch Erregung einer Wicklung 66 eines Relais 67 betätigbar ist. Durch das Relais 67 ist eine galvanische Trennung zwischen dem Energieversorgungsteil 28 und dem Steuerteil 29 der elektrischen Steuerschaltung 27 erreicht. Die Wicklung 66 ist mit einem Näherungsinitiator 68 verbunden, also einem elektronischen Schaltkreis, der entweder durch kapazitive oder induktive (metallische) Beeinflussung ein Signal an seinem Ausgang liefert. Durch die Art der Beeinflussung kann man eine bestimmte Signalform erzwingen. In der Regel besitzt der Näherungsinitiator eine aktive Elektronik und einen geeigneten Ausgangsverstärker, der den leitenden oder gesperrten Zustand des Näherungsinitiators als Signalgröße in geeigneter Form verfügbar machen kann. Da diese Näherungsinitiatoren an sich bekannt sind, kann auf eine detaillierte Beschreibung verzichtet werden. Jedenfalls wird in Fig. 6 der Schaltzustand des Näherungsinitiators 68 dazu genutzt, das Relais 67 zu betätigen.

In Fig. 7 ist der Energieversorgungsteil 28 der elektrischen Steuerschaltung 27 wiederum galvanisch von dem Steuerteil 29 getrennt. Dies geschieht durch einen Optokoppler 69, der eine Leuchtdiode 70 und einen Fototransistor 71 aufweist.

Die Leuchtdiode 70 erhält Steuersignale von einem Ausgangstransistor 72 einer elektronischen Steuerung 73, z. B. einer Zeitablaufsteuerung, die über eine Betriebsspannung $U_B$ verfügt. Der Ausgangstransistor 72 wird durch die elektronische Steuerung 73 beeinflußt, kurzzeitig leitend gemacht. Dadurch fließt Strom durch die Leuchtdiode 70, deren Lichtschein den Fototransistor 71 leitend macht. Dadurch kann von der Anode 39 des Schaltelements 31 über den Arbeitswiderstand 58 und den Fototransistor 71 ein Strom zum Steuergate 42 fließen und das

Schaltelement 31 zünden. Der Arbeitswiderstand 58 begrenzt den Strom zum Schutz des Fototransistors 71 und des Schaltelements 31. Ein zwischen der Kathode 40 und dem Steuergate 42 eingeschalteter Widerstand 74 sorgt dafür daß, wenn kein Steuersignal vorhanden ist, sich kein undefinierter Zustand ergibt, sondern das Steuergate 42 auf das gleiche Potential wie die Kathode 40 gezogen wird.

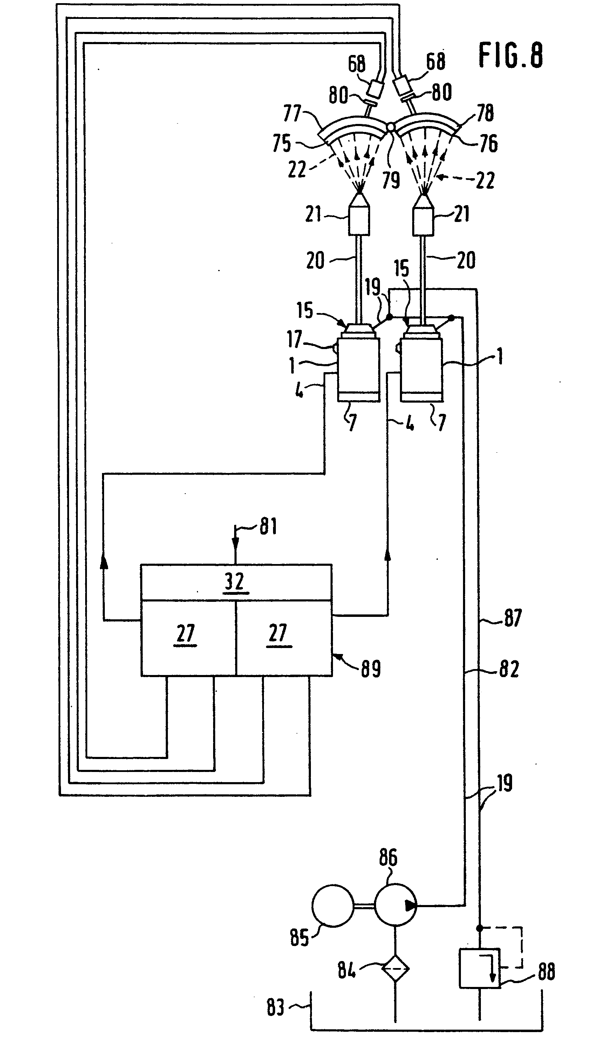

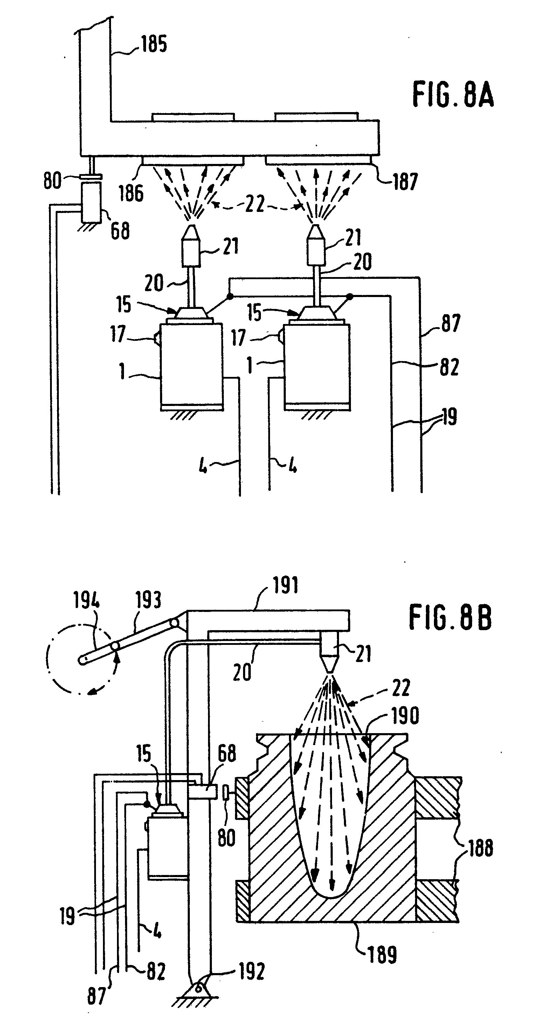

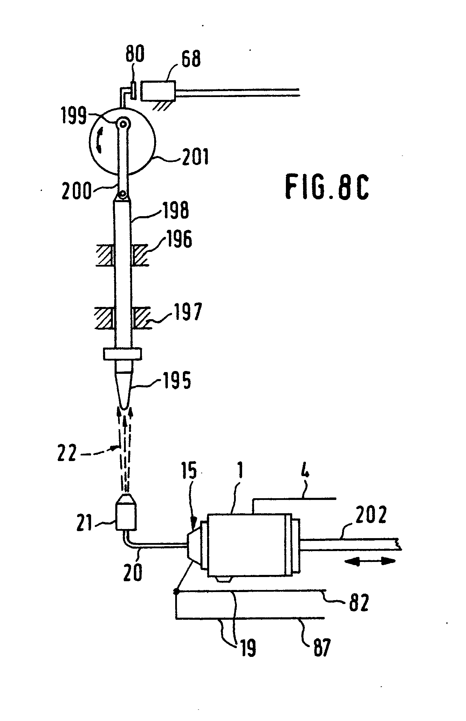

Fig. 8 zeigt eine Vorrichtung zum Aufbringen einer Schmier- oder Trennflüssigkeit auf Fertigformhälften 75 und 76, die jeweils in eine Fertigformzangenhälfte 77 und 78 in an sich bekannter Weise eingehängt sind. Die Fertigformzangenhälften 77, 78 sind um eine Achse 79 schwenkbar und tragen jeweils eine Initiatorfahne 80, mit der der Schaltzustand eines zugehörigen Näherungsinitiators 68 gemäß Fig. 6 beeinflußt wird. Jeder Näherungsinitiator 68 gibt Signale in die zugehörige elektrische Steuerschaltung 27, die über die Leitung 4 die Wicklung 5 des in Fig. 8 nicht im einzelnen gezeichneten Elektromagneten 2 erregt.

Entsprechend der oben in Fig. 3 gestrichelt angedeuteten Alternative sind in Fig. 8 zwei elektrische Steuerschaltungen 27 parallel zueinander mit dem Netztransformator 32 verbunden, der aus einem Netz 81 mit elektrischer Energie versorgt wird.

Ein Vorlaufzweig 82 der Niederdruckleitung 19 wird aus einem Tank 83 über ein Ansaugfilter 84 mittels einer durch einen Motor 85 angetriebenen Pumpe 86 mit Schmier- oder Trennflüssigkeit versorgt. In einem Rücklaufzweig 87 der Niederdruckleitung 19 befindet sich ein Druckbegrenzungsventil 88, das konstanten Druck in der Niederdruckleitung 19 gewährleistet.

Wenn in Fig. 8 die Fertigformhälften 75, 76 sich in ihrer voll aufgeschwenkten Endstellung befinden, erzeugen die Näherungsinitiatoren 68 jeweils einen Steuerimpuls, der zu einem einmaligen Sprühvorgang jeder der beiden Sprühdüsen 21 führt.

Ein den Netztransformator 32 und die elektrischen Steuerschaltungen 27, 27 umfassendes Steuergerät 89 kann zentral an einer geeigneten Stelle in genügendem Sicherheitsabstand von der eigentlichen Glasformmaschine angeordnet werden. Das Steuergerät 89 ist somit ungünstigen Schwingungs- und Temperatureinflüssen in unmittelbarer Nähe der Glasformmaschine entzogen. Dies fördert die Betriebssicherheit und spart Raum an der Glasformmaschine.

In den Fig. 8A, 8B und 8C sind gleiche Teile wie in Fig. 8 mit gleichen Bezugszahlen versehen.

In Fig. 8A trägt ein Tragarm 185 geteilte Mündungsformen 186 und 187 entlang einer Bahn, auf der die Glasgegenstände gefertigt werden. An dem Tragarm 185 ist die Initiatorfahne 80 befestigt, die beim Überfahren des maschinenfest angeordneten Näherungsinitiators 68 in der zu Fig. 8 beschriebenen Weise für ein Absprühen der Sprühdüsen 21 auf die Mündungsformen 186, 187 sorgt.

In Fig. 8B trägt eine Haltevorrichtung 188 eine ungeteilte Vorform oder Blockform 189, deren Formausnehmung 190 zweckmäßigerweise kurz vor der Aufnahme eines Glaspostens mittels des Sprühkegels 22 besprüht werden soll. Dazu kann die Blockform 189 stillstehen. An der Haltevorrichtung 188 ist die Initiatorfahne 80 befestigt. Der Näherungsinitiator 68 sowie die Preßpumpe 15, die Hochdruckleitung 20 und die Sprühdüse 21 sind an einem Lenker 191 befestigt. Der Lenker 191 ist um eine maschinenfeste Achse 192 schwenkbar und über eine Pleuelstange 193 mit einer Kurbel 194 eines Kurbeltriebs verbunden. Bei Drehung oder Schwenkung der Kurbel 194 schwenkt der Lenker 191 um die Achse 192. Sobald der Näherungsinitiator 68 in genügende Nähe zu der Initiatorfahne 80 gelangt, wird die Formausnehmung 190 besprüht.

In Fig. 8C ist ein Preßstempel 195 axial verschiebbar in Lagern 196 und 197 der Glasformmaschine mit einem Schaft 198 gelagert. An dem Schaft 198 ist eine durch einen Kurbelzapfen 199 antreibbare Pleuelstange 200 angelenkt. Der Kurbelzapfen 199 ist an einer oszillierend antreibbaren Scheibe 201 befestigt, die auch die Initiatorfahne 80 trägt. Der Näherungsinitiator 68 ist maschinenfest angeordnet, während die Sprühdüse 21, die Hochdruckleitung 20, die Preßpumpe 15 und das Gehäuse 1 an einem Träger 202 längsverschiebbar an der Glasformmaschine gelagert sind und jeweils nur zum Besprühen des Preßstempels 195 kurzzeitig so eingefahren werden daß die Längsachse der Sprühdüse 21 wie in Fig. 8C gezeigt mit der Längsachse des Preßstempels 195 fluchtet.

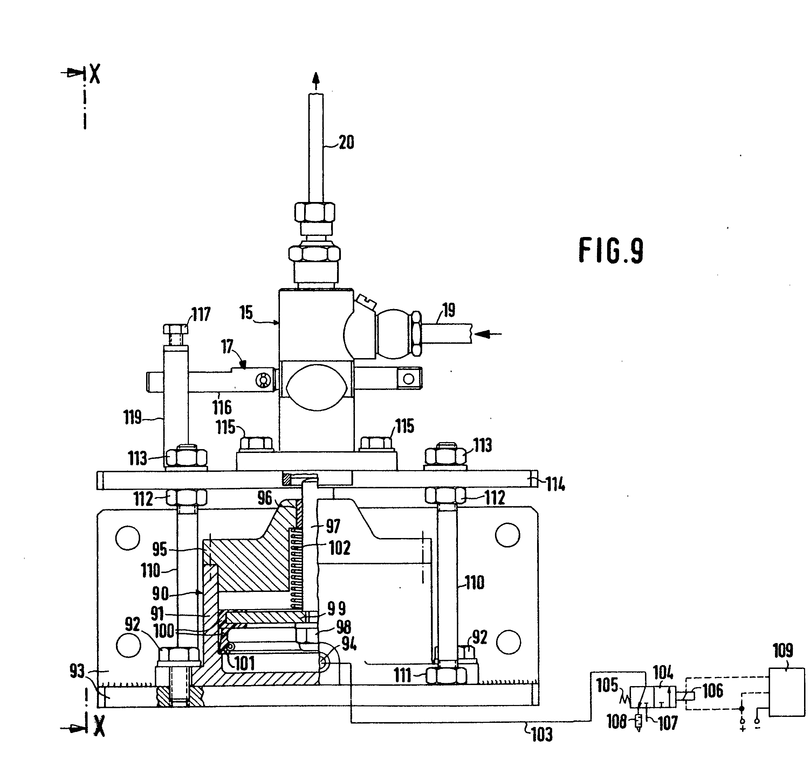

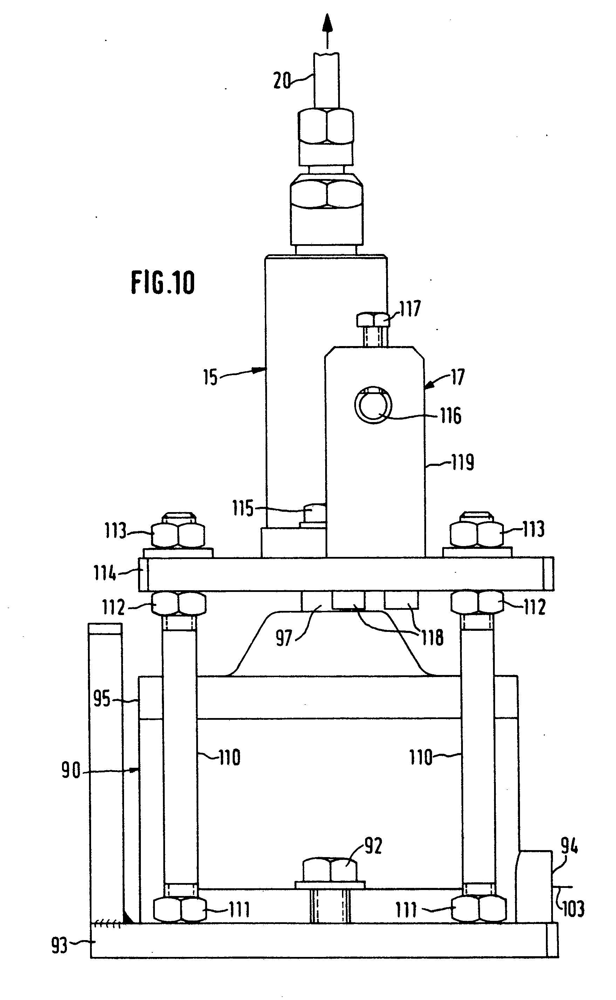

Die Fig. 9 und 10 zeigen in unterschiedlichen Ansichten einen Antrieb für die Preßpumpe 15, der einen als Kolben-Zylinder-Einheit 90 ausgebildeten Pneumatikmotor aufweist.

Ein Zylinder 91 der Kolben-Zylinder-Einheit 90 ist durch Schrauben 92 mit einer Montageplatte 93 verschraubt, weist einen Impulsluftanschluß 94 auf und ist durch einen Deckel 95 verschlossen. In den Deckel 95 ist mittig eine Führungsbuchse 96 für eine Kolbenstange 97 eingesetzt, an der unten mit einer Mutter 98 ein Kolben 99 befestigt ist. Der Kolben 99 ist mit einer Ringdichtung 100 versehen, die in der in Fig. 9 gezeigten Ruhestellung unten an einer Schulter 101 des Zylinders 91 anliegt. Eine Rückstellfeder 102 stützt sich einerseits an dem Kolben 99 und andererseits an dem Deckel 95 ab.

Der Impulsluftanschluß 94 ist über eine Leitung 103 mit einem 3Wege/2Stellungsventil 104 verbunden, das durch eine Rückstellfeder 105 in die in Fig. 9 gezeigte Schaltstellung rückgestellt und durch einen Elektromagneten 106 in die andere Schaltstellung schaltbar ist. Das Ventil 104 ist an eine Druckluftversorgungsleitung 107 angeschlossen und an seinem Auslaß mit einem Schalldämpfer 108 versehen. Der Elektromagnet 106 wird durch einen Näherungsinitiator 109 betätigt, der dem Näherungsinitiator 68 in den Fig. 6 und 8 entspricht. Statt des Näherungsinitiators 109 können auch andere Impulsgeneratoren entsprechend den Fig. 3, 4, 5 und 7 verwendet werden.

In die Montageplatte 93 sind im Abstand voneinander vier Schraubenbolzen 110 eingeschraubt und mit einer Kontermutter 111 festgelegt. An dem freien Ende der Schraubenbolzen 110 ist mit Muttern 112 und 113 eine Tragplatte 114 höhenverstellbar angebracht. Mit der Tragplatte ist durch Schrauben 115 die Preßpumpe 15 fluchtend mit der Kolbenstange 97 der Kolben-Zylinder-Einheit 90 verbunden. Die Verstellvorrichtung 17 weist in diesem Fall eine Stange 116 auf, die zur Änderung der Fördermenge der Preßpumpe 15 in Fig. 9 nach links oder rechts bewegt und in der gewünschten Endstellung durch eine Feststellschraube 117 eines an der Tragplatte 14 mit Schrauben 118 befestigten Joches 119 fixiert wird.

Die Kolbenstange 97 treibt in den Fig. 9 und 10 nur eine Preßpumpe 15 an. Alternativ kann die Kolbenstange 97 in nicht gezeichneter Weise an ihrem freien Ende mit einem Verzweigungsstück versehen sein, das z. B. zwei Kolbenpumpen 15 entsprechend Fig. 2 antreibt.

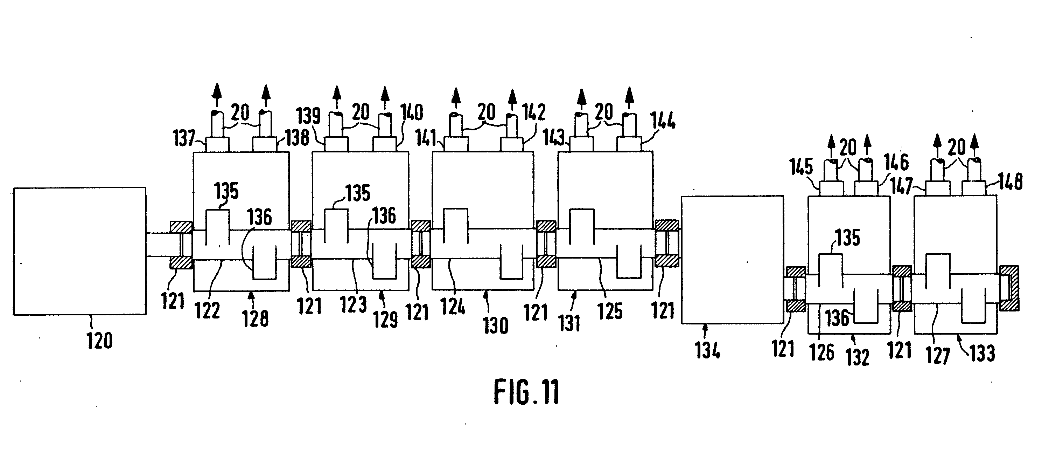

Fig. 11 zeigt in schematischer Darstellung einen in der Drehzahl regelbaren elektrischen Antriebsmotor 120, der in an sich bekannter Weise mit der Glasformmaschine synchronisiert ist. Der Antriebsmotor 120 treibt über Kupplungen 121 Nockenwellen 122 bis 127 von Zweizylinderpumpen 128 bis 133. Zwischen die Nockenwellen 125 und 126 ist ein Getriebe 134 mit dem Übersetzungsverhältnis 1 : 0,5 eingeschaltet. Jede Nockenwelle 122 bis 127 ist mit zwei Nocken 135 und 136 versehen, die um 180° gegenüber einander versetzt sind. Jeder Nocken 135, 136 treibt eine Preßpumpe 137 bis 148 an.

Bei einer Glasformmaschine mit sogenanntem Doppelformbetrieb, bei der also in jedem Arbeitszyklus zwei Glasgegenstände im wesentlichen gleichzeitig mit einer Doppelform, also zwei miteinander verknüpften Formwerkzeugen, hergestellt werden, wird die Schmier- oder Trennflüssigkeit z. B. durch die Preßpumpen 137, 139, 141 und 143 entsprechend Fig. 8 auf an Zangenhälften aufgehängte, nicht dargestellte Vorformmittelstückhälften aufgebracht. Diese Vorformmittelstückhälften dienen beim Enghals-Preß-Blasen als Verbindungsstücke zwischen einer sogenannten Blockform, also einem ungeteilten Vorformunterteil, und einer geteilten Mündungsform. Die beiden Blockformen der Doppelform werden z. B. durch die Preßpumpen 138 und 140 mit Schmier- oder Trennflüssigkeit besprüht und die beiden Preßstempel durch die Preßpumpen 142 und 144. Die übrigen Preßpumpen 145 bis 148 dienen zum Aufbringen der Schmier- oder Trennflüssigkeit auf die Mündungsformen.

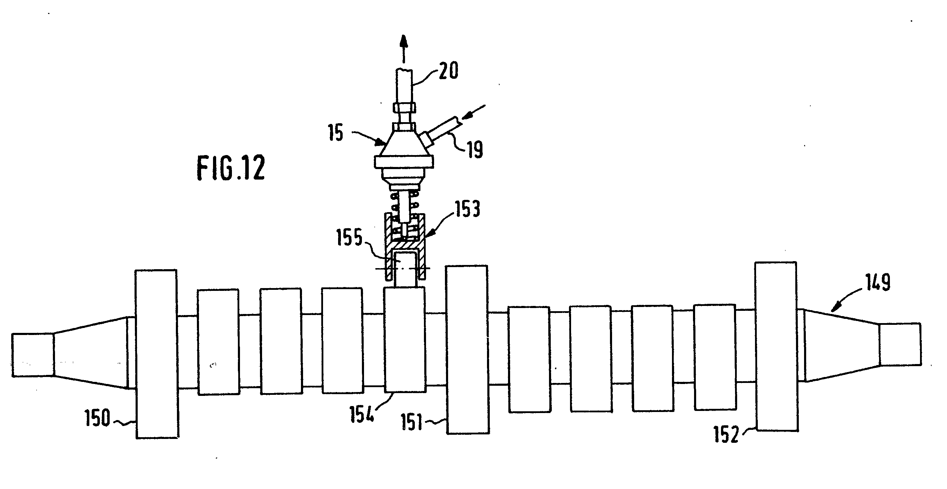

Anstelle der in Fig. 11 dargestellten Zweizylinderpumpen 128 bis 133 mit Eigenantrieb können auch gemäß Fig. 12 einzelne Preßpumpen 15 mit Fremdantrieb durch eine speziell angefertigte Nockenwelle 149 verwendet werden. Die Nockenwelle 149 ersetzt praktisch die Nockenwellen 122 bis 125 in Fig. 11 und ist an den Scheiben 150, 151 und 152 dreifach gelagert.

In Fig. 12 ist nur eine der acht durch die Nockenwelle 149 antreibbaren Preßpumpen 15 gezeichnet. Jede Preßpumpe 15 wird über einen Rollenstößel 153 durch einen zugehörigen Nocken 154 angetrieben. Eine Rolle 155 des Rollenstößels 153 läuft dabei auf dem Nocken 154 ab.

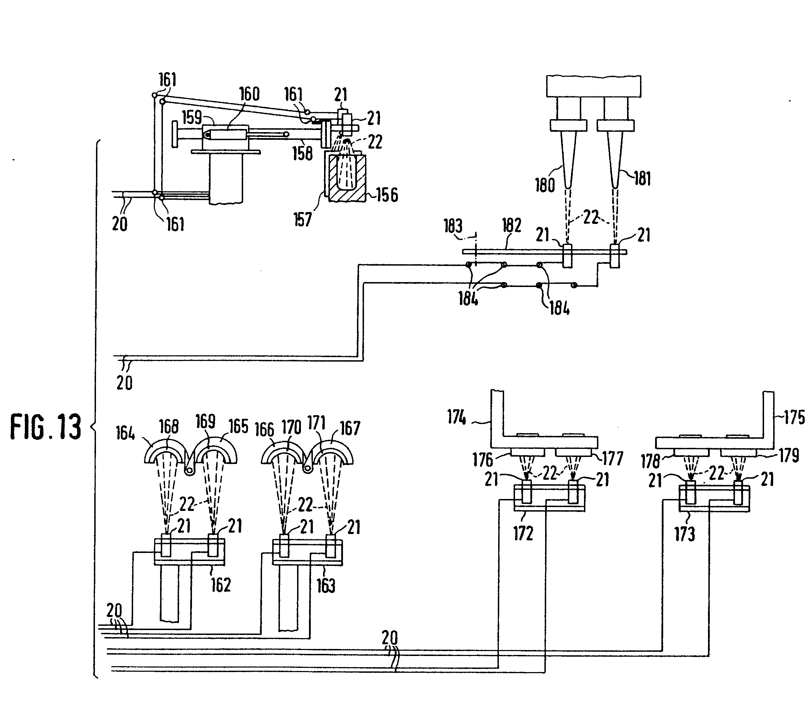

Fig. 13 zeigt Teile einer Glasformmaschine, die mit jeder der zuvor beschriebenen Aufbringvorrichtungen mit Schmier- oder Trennflüssigkeit besprüht werden können. Es handelt sich um eine Glasformmaschine, die in dem zuvor erwähnten Doppelformbetrieb arbeitet.

Zwei ungeteilte Blockformen 156 und 157 sind in einem Mittenabstand von z. B. 120 mm nebeneinander angeordnet und in Fig. 13 zur Verdeutlichung der Darstellung leicht perspektivisch gezeichnet. Die Schmier- oder Trennflüssigkeit wird in jede der Blockformen 156, 157 durch eine Sprühdüse 21 eingebracht, die an zwei nebeneinander angeordneten Stangen 158 montiert sind. Die Stangen 158 sind in einer maschinenfesten Kugelführung 159 durch eine Kolben-Zylinder-Einheit 160 längsverschiebbar. Die Sprühdüsen 21, 21 werden, wie in Fig. 13 gezeigt, über das Zentrum der Blockformen 156, 157 geschoben, wenn sich die Blockformen 156, 157 im absoluten Stillstand befinden. Nach dem Sprühen werden die Sprühdüsen 21, 21 sogleich wieder zurückgefahren und ein Glasposten in jede der Blockformen 156, 157 eingebracht. In den Hochdruckleitungen 20, 20 befinden sich Winkeldrehgelenke 161, damit die beweglichen Abschnitte der Hochdruckleitungen 20, 20 den Längsbewegungen der Sprühdüsen 21, 21 folgen können.

Links unten in Fig. 13 sind je zwei Sprühdüsen an einem maschinenfesten Träger 162 und 163 angebracht. Jede dieser Düsen 21 sprüht Schmier- oder Trennflüssigkeit auf in Zangenhälften 164 bis 167 eingehängte Vorformmittelstückhälften 168 bis 171 in deren voll aufgeschwenkter Endstellung.

Rechts unten in Fig. 13 sind je zwei Sprühdüsen 21 an einem maschinenfesten Träger 172 und 173 angebracht. Über jede Sprühdüse 21 wird eine an bewegbaren Tragarmen 174 und 175 gelagerte geteilte Mündungsform 176 bis 179 gefahren, so daß die Sprühkegel 22 möglichst im geschlossenen Zustand der Mündungsformen 176 bis 179 die Schmier- oder Trennflüssigkeit aufbringen können.

Rechts oben in Fig. 13 sind zwei Sprühdüsen 21, 21 axial fluchtend mit Preßstempeln 180 und 181 an einem Haltearm 182 befestigt. Der Haltearm ist um eine senkrechte Achse 183 schwenkbar. Dabei gestatten Winkeldrehgelenke 184 eine Folgebewegung beweglicher Teile der Hochdruckleitungen 20. Die Preßstempel 180, 181 werden dann besprüht, wenn sie sich in Ruhe in ihrer obersten Totlage gemäß Fig. 13 befinden.

Der Winkel des Sprühkegels 22 der Sprühdüsen 21 ist, wie die verschiedenen Ausführungsbeispiele zeigen, nach Bedarf zu wählen.

**Patentansprüche**

1. Vorrichtung zum intermittierenden Aufbringen einer durch eine Pumpe (15; 137 bis 148) unter Druck setzbaren Schmier- oder Trennflüssigkeit (22) ohne ein Treib- oder Trägergas durch wenigstens eine Sprühdüse (21) auf ein Teil einer Glasformmaschine, z. B. eine Glaspostenschere (24), ein Fallrohr oder eine Rinne zur Führung des Glaspostens, eine Form, ein Formteil (75, 76; 186, 187; 189; 156, 157; 168 bis 171; 176 bis 179) oder einen Preßstempel (195; 180, 181), dadurch gekennzeichnet, daß jeder Sprühdüse (21) eine Hochdruck von mehr als 100 bar erzeugende Preßpumpe (15; 137 bis 148) zugeordnet ist, daß jede Preßpumpe (15; 137 bis 148) über eine Hochdruckleitung (20) mit der zugehörigen Sprühdüse (21) verbunden ist, und daß jede Preßpumpe (15; 137 bis 148) durch einen Antrieb oder mehrere Preßpumpen (15; 137 bis 148) durch einen gemeinsamen Antrieb antreibbar sind.

2. Vorrichtung nach Anspruch 1, dadurch gekennzeichnet, daß der Antrieb einen Elektromagneten (2) aufweist, durch dessen Anker (6) die wenigstens eine Preßpumpe (15) betätigbar ist, daß eine Wicklung (5) des Elektromagneten (2) im Entladestromkreis eines Kondensators (30) eines Energieversorgungsteils (28) einer elektrischen Steuerschaltung (27) angeordnet ist, und daß der Energieversorgungteil (28) in Reihenschaltung mit dem Kondensator (30) ein steuerbares Schaltelement (31) enthält, das durch einen Steuerteil (29) der elektrischen Steuerschaltung (27) betätigbar ist.

3. Vorrichtung nach Anspruch 2, dadurch gekennzeichnet, daß ein Ladestromkreis des Kondensators (30) einen Gleichrichter (33) und eine Spannungsverdopplungsschaltung (34) aufweist, die mit der Sekundärwicklung eines Netztransformators (32) verbunden sind.

4. Vorrichtung nach Anspruch 2 oder 3, dadurch gekennzeichnet, daß an die Sekundärwicklung eines Netztransformators (32) mehrere Energieversorgungsteile (28) parallel zueinander angeschlossen sind, wobei jeder Energieversorgungteil einen Kondensator (30) gemäß Anspruch 2 oder 3 auflädt.

5. Vorrichtung nach einem der Ansprüche 2 bis 4, dadurch gekennzeichnet, daß im Entladestromkreis des Kondensators (30) die Wicklungen (5) mehrerer jeweils wenigstens eine Preßpumpe (15) antreibender Elektromagneten (2) angeordnet sind.

6. Vorrichtung nach einem der Ansprüche 2 bis 5, dadurch gekennzeichnet, daß das steuerbare Schaltelement (31) ein Thyristor ist, dessen Steuergate (42) mit dem Steuerteil (29) der elektrischen Steuerschaltung (27) verbunden ist.

7. Vorrichtung nach einem der Ansprüche 2 bis 6, dadurch gekennzeichnet, daß der Energieversorgungsteil (28) und der Steuerteil (29) der elektrischen Steuerschaltung (27), z. B. durch einen Optokoppler (35; 69) oder einen Relaiskontakt (65) oder einen Zündtransformator (52), galvanisch voneinander getrennt sind.

8. Vorrichtung nach einem der Ansprüche 2 bis 7, dadurch gekennzeichnet, daß der Steuerteil (29) der elektrischen Steuerschaltung (27) mit einem Steuerelement, z. B. einem Schalter (48; 59), der Schnittstelle (55) eines Rechnersystems (56), einem Näherungsinitiator (68) oder einer übergeordneten elektronischen Steuerung (73) der Glasformmaschine, verbunden ist.

9. Vorrichtung nach einem der Ansprüche 2 bis 6, dadurch gekennzeichnet, daß der Steuerteil (29) der elektrischen Steuerschaltung (27) mit einem als Tastschalter (59, 60) ausgebildeten Steuerelement verbunden ist.

10. Vorrichtung nach Anspruch 1, dadurch gekennzeichnet, daß der Antrieb einen Pneumatikmotor aufweist.

11. Vorrichtung nach Anspruch 10, dadurch gekennzeichnet, daß der Pneumatikmotor als Kolben-Zylinder-Einheit (90) ausgebildet ist, deren Kolbenstange (97) unmittelbar wenigstens eine Preßpumpe (15) antreibt.

12. Vorrichtung nach Anspruch 1, dadurch gekennzeichnet, daß der Antrieb für jede Preßpumpe (15; 137 bis 148) einen Nocken (154; 135, 136) einer Nockenwelle (149; 122 bis 127) aufweist.

13. Vorrichtung nach Anspruch 12, dadurch gekennzeichnet, daß die Nockenwelle (149; 122 bis 127) mit einem in der Drehzahl regelbaren elektrischen Antriebsmotor (120) gekuppelt ist.

14. Vorrichtung nach Anspruch 12 oder 13, dadurch gekennzeichnet, daß die Nockenwelle (122) mit wenigstens einer weiteren Nockenwelle (123 bis 127) zum Antrieb wenigstens einer weiteren Preßpumpe gekuppelt (121) ist.

15. Vorrichtung nach Anspruch 14, dadurch gekennzeichnet, daß zwischen wenigstens zwei aufeinanderfolgendem Nockenwellen (125, 126) ein Getriebe (134) geschaltet ist.

16. Vorrichtung nach einem der Ansprüche 1 bis 15, dadurch gekennzeichnet, daß ein Einlaß wenigstens einer Preßpumpe (15; 137 bis 148) an eine Niederdruckleitung (19) für die Schmieroder Trennflüssigkeit angeschlossen ist, in deren Vorlaufzweig (82) eine Pumpe (86) und in deren Rücklaufzweig (87) zu einem Tank (83) ein Druckbegrenzungsventil (88) eingeschaltet sind.

**Claims**

1. Device for the intermittent application of a lubricating or separating liquid (22), deliverable under pressure from a pump (15; 137 to 148), without a propellant or carrier gas, by means of at least one spray nozzle (21) on to a part of a glass forming machine, e. g. a glass gob shears (24), a gravity tube or a chute for guiding the glass gobs, a mould, a mould part (75, 76; 186, 187; 189; 156, 157; 168 to 171; 176 to 179) or a pressing plunger (195; 180, 181), characterised in that with each spray nozzle (21) is associated a pressing pump (15; 137 to 148) producing high pressure of more than 100 bar, that each pressing pump (15; 137 to 148) is connected by way of a high-pressure conduit (20) to the associated spray nozzle (21), and that each pressing pump (15; 137 to 148) is drivable by a respective drive means or several pressing pumps (15; 137 to 148) are drivable by a common drive means.

2. Device according to claim 1, characterised in that the drive means comprises an electromagnet (2) through the armature (6) of which said at least one pressing pump (15) is actuatable, that a winding (5) of the electromagnet (2) is arranged in the discharging circuit of a capacitor (30) of a power supply section (28) of an electrical control circuit (27), and that the power supply section (28) includes in series connection with the capacitor (30) a controllable switching element (31) which is actuated by a control section (29) of the electrical control circuit (27).

3. Device according to claim 2, characterised in that a charging circuit for the capacitor (30) comprises a rectifier (33) and a voltage doubling circuit (34) which are connected to the secondary winding of a power transformer (32).

4. Device according to claim 2 or 3, characterised in that a plurality of power supply sections (28) are connected in parallel to one another to the secondary winding of a power transformer (32), with each power supply section charging a capacitor (30) according to claim 2 or 3.

5. Device according to one of claims 2 to 4, characterised in that in the discharging circuit of the capacitor (30) are arranged the windings (5) of a plurality of electromagnets (2) respectively driving at least one pressing pump (15).

6. Device according to one of claims 2 to 5, characterised in that the controllable switching element (31) is a thyristor whose control gate (42) is connected to the control section (29) of the electrical control circuit (27).

7. Device according to one of claims 2 to 6, characterised in that the power supply section (28) and the control section (29) of the electrical control circuit (27) are galvanically separated from one another, e. g. by an opto-electric coupler (35; 69) or a relay contact (65) or a trigger transformer (52).

8. Device according to one of claims 2 to 7, characterised in that the control section (29) of the electrical control circuit (27) is connected to a control element, e. g. a switch (48; 59), the interface (55) of a computing system (56), a proximity detector (68) or a higher-order electronic control (73) of the glass forming machine.

9. Device according to one of claims 2 to 6, characterised in that the control section (29) of the electrical control circuit (27) is connected to a control element formed as a push button switch (59, 60).

10. Device according to claim 1, characterised in that the drive means comprises a pneumatic motor.

11. Device according to claim 10, characterised in that the pneumatic motor is formed as a pistoncylinder unit (90) whose piston rod (97) directly drives at least one pressing pump (15).

12. Device according to claim 1, characterised in that the drive means for each pressing pump (15; 137 to 148) includes a cam (154; 135, 136) of a camshaft (149; 122 to 127).

13. Device according to claim 12, characterised in that the camshaft (149; 122 to 127) is coupled to a variable-speed electric driving motor (120).

14. Device according to claim 12 or 13, characterised in that the camshaft (122) is coupled (121) to at least one further camshaft (123 to 127) for the driving of at least one further pressing pump.

15. Device according to claim 14, characterised in that a gear unit (134) is connected between at least two successive camshafts (125, 126).

16. Device according to one of claims 1 to 15, characterised in that an inlet of at least one pressing pump (15; 137 to 148) is connected to a low-pressure conduit (19) for the lubricating or separating liquid, said low-pressure conduit having a feeding branch (82) which includes a pump (86) and a return branch (87) to a tank (83) which includes a pressure limiting valve (88).

### Revendications

1. Dispositif pour l'application intermittente d'un liquide de lubrification ou de démoulage (22), pouvant être déposé à l'aide d'une pompe (15; 137 à 148) sous pression, sans gaz propulseur ou gaz porteur, par au moins une buse de pulvérisation (21), sur un élément d'une machine de formage du verre, par exemple un cisseau à paraison (24), un tuyau de descente ou une goulotte pour le guidage de la paraison, un moule, une partie de moule (75, 76; 186, 187; 189; 156, 157; 168 à 171; 176 à 179) ou un poinçon (195; 180, 181), caractérisé en ce qu'à chaque buse de pulvérisation (21) est attribuée une pompe de pression (15; 137 à 148) produisant une haute pression supérieure à 100 bars; que chaque pompe de pression (15; 137 à 148) est reliée à la buse de pulvérisation correspondante (21) par l'intermédiaire d'une conduite haute pression (20); et que chaque pompe de pression (15; 137 à 148) peut être entraînée par un mécanisme d'entraînement, ou plusieurs pompes de pression (15; 137 à 148) peuvent être entraînées par un mécanisme d'entraînement commun.

2. Dispositif selon la revendication 1, caractérisé en ce que le mécanisme d'entraînement possède un électroaimant (2), dont l'induit (6) peut actionner la pompe de pression (15) (dont il y a au moins un exemplaire); qu'un enroulement (5) de l'électro-aimant (2) est disposé dans le circuit de décharge d'un condensateur (30) d'une partie alimentation en énergie (28) d'un circuit de commande électrique (27); et que la partie alimentation en énergie (28) contient, en série avec le condensateur (30), un élément de commutation commandable (31), lequel peut être actionné par une partie commande (29) du circuit de commande électrique (27).

3. Dispositif selon la revendication 2, caractérisé en ce qu'un circuit de charge du condensateur (30) possède un redresseur (33) et un circuit doubleur de tension (34), lesquels sont reliés à l'enroulement secondaire d'un transformateur de réseau (32).

4. Dispositif selon l'une quelconque des revendications 2 ou 3, caractérisé en ce que plusieurs parties alimentation en énergie (28), montées en parallèle les unes aux autres, sont raccordées à l'enroulement secondaire d'un transformateur de réseau (32), chaque partie alimentation en énergie chargeant un condensateur (30) selon l'une quelconque des revendications 2 ou 3.

5. Dispositif selon l'une quelconque des revendications 2 à 4, caractérisé en ce que les enroulements (5) de plusieurs électro-aimants (2) entraînant chacun au moins une pompe de pression (15), sont disposés dans le circuit de décharge du condensateur (30).

6. Dispositif selon l'une quelconque des revendications 2 à 5, caractérisé en ce que l'élément de commutation commandable (31) est un thyristor dont la gâchette de commande (42) est reliée à la partie commande (29) du circuit de commande électrique (27).

7. Dispositif selon l'une quelconque des revendications 2 à 6, caractérisé en ce que la partie alimentation en énergie (28) et la partie commande (29) du circuit de commande électrique (27) sont séparées l'une de l'autre par une séparation galvanique, par exemple par un coupleur optique (35; 69), ou un contact de relais (65) ou un transformateur d'allumage (52).

8. Dispositif selon l'une quelconque des revendications 2 à 7, caractérisé en ce que la partie commande (29) du circuit de commande électrique (27) est reliée à un élément de commande, par exemple un commutateur (48; 59), l'interface (55) d'un système calculateur (56), un détecteur de proximité (68) ou une commande électronique prioritaire (73) de la machine de moulage du verre.

9. Dispositif selon l'une quelconque des revendications 2 à 6, caractérisé en ce que la partie commande (29) du circuit de commande électrique (27) est reliée à un élément de commande conçu comme un commutateur à touches (59, 60).

10. Dispositif selon la revendication 1, caractérisé en ce que le mécanisme d'entraînement possède un moteur pneumatique.

11. Dispositif selon la revendication 10, caractérisé en ce que le moteur pneumatique est conçu comme une unité à piston-cylindre (90), dont la tige de piston (97) entraîne directement au moins une pompe de pression (15).

12. Dispositif selon la revendication 1, caractérisé en ce que le mécanisme d'entraînement pour chaque pompe de pression (15; 137 à 148) possède une came (154; 135, 136) d'un arbre à cames (149; 122 à 127).

13. Dispositif selon la revendication 12, caractérisé en ce que l'arbre à cames (149; 122 à 127) est couplé à un moteur électrique d'entraînement à régime variable (120).

14. Dispositif selon l'une quelconque des revendications 12 ou 13, caractérisé en ce que l'arbre à cames (122) est couplé à au moins un autre arbre à cames (123 à 127) pour entraîner au moins une autre pompe de pression (121).

15. Dispositif selon la revendication 14, caractérisé en ce qu'entre au moins deux arbres à cames successifs (125, 126) est inséré un engrenage (134).

16. Dispositif selon l'une quelconque des revendications 1 à 15, caractérisé en ce qu'un orifice d'admission d'au moins une pompe de pression (15; 137 à 148) est reliée à une conduite basse pression (19) pour le liquide de lubrification ou de démoulage, dans la branche aller (82) de laquelle est insérée une pompe (86), et dans la branche retour (87), allant à un réservoir (83), de laquelle est insérée une soupape de limitation de pression (88).

FIG.1

FIG.2

FIG.3

FIG.4

FIG.5

FIG.6

FIG.7

FIG.8

0 035 145

FIG. 8A

FIG. 8B

FIG. 8C

FIG.9

FIG.10

FIG.11

0 035 145

FIG.12

FIG. 13